# EUROPÄISCHE PATENTSCHRIFT

(11) **EP 1 187 753 B1**
(45) Veröffentlichungstag und Bekanntmachung des Hinweises auf die Patenterteilung: **21.04.2004**
(21) Anmeldenummer: 00934986.1
(22) Anmeldetag: 05.05.2000
(51) Int. Cl.: B62D 21/11, B62D 65/04

(54) **VOLLHILFSRAHMEN**
FULL AUXILIARY CHASSIS
FAUX-CHASSIS PLEIN

(30) Priorität: 22.05.1999 DE 19923693
(43) Veröffentlichungstag der Anmeldung: 20.03.2002
(73) Patentinhaber: Volkswagen Aktiengesellschaft, 38436 Wolfsburg (DE)
(72) Erfinder: BAUER, Andreas, D-38442 Wolfsburg (DE); LANGE, Wolfgang, D-38448 Wolfsburg (DE); BOCK, Michael, D-38124 Braunschweig (DE); SCHLAF, Dag-Arnulf, D-38518 Gifhorn (DE); DAU, Wolfram, D-38444 Wolfsburg (DE)
(86) Internationale Anmeldenummer: PCT/EP2000/004059
(87) Internationale Veröffentlichungsnummer: WO 2000/071406

(56) Entgegenhaltungen:
- EP-A- 0 678 441
- WO-A-96/19373
- DE-A- 3 925 990
- DE-A- 19 524 758
- DE-A- 19 654 571
- DE-U- 8 522 392
- GB-A- 2 281 047
- US-A- 2 929 461

## Beschreibung

Die Erfindung bezieht sich auf ein Kraftfahrzeug, insbesondere Personenkraftfahrzeug, mit einem Vollhilfsrahmen zur Aufnahme und Halterung eines Antriebsmotors, eines Getriebes und weiterer Hilfsaggregate wie z. B. eines hydraulischen Steuergeräts, eines Kühlers, eines Lenkgetriebes oder eines ABS/EDS-Gerätes, umfassend einen vorderen Querträger, einen hinteren Querträger, und zwei Längstraversen, die mit den beiden Querträgern zu einer in der Draufsicht etwa rechteckförmigen, geschlossenen Baueinheit zusammengesetzt und miteinander verbunden sind, wobei die Baueinheit derart ausgebildet ist, um von unten an einer Karosserie des Kraftfahrzeugs befestigt zu werden.

Aus der DE 197 03 504 A1 ist ein Hilfsrahmen für ein Kraftfahrzeug bekannt, der zur Erhöhung einer Quersteifigkeit des Kraftfahrzeuges dient. Der Hilfsrahmen weist Seitenteile auf, die jeweils mindestens zwei Anlenkpunkte zur schwenkbaren Anlenkung eines mit einem Radträger verbundenen Quer- oder Schräglenkers aufweisen, und eine zwischen den Seitenteilen angeordnete einschalige Quertraverse, die bei Einbau des Hilfsrahmens in das Kraftfahrzeug gegenüber einer Verbindungslinie der Radmittelpunkt der Räder versetzt ist. Dieser Hilfsrahmen zeichnet sich dadurch aus, dass die Querschnittsfläche der Quertraverse ein halboffenes Profil aufweist, dessen Öffnung bei Einbau des Hilfsrahmens in das Kraftfahrzeug im wesentlichen in die zur Verbindungslinie der Radmittelpunkte entgegengesetzte Richtung weist. Die Quertraverse kann bei Verwendung im Vorderachsbereich als Untergurt zur Aufnahme eines elektrohydraulischen Pumpenaggregates, eines ABS/EDS-Geräts und/oder einer Standheizung benutzt werden. Weiterhin kann der Untergurt zur Anbringung von hydraulischen Leitungen des vorderen Bremskreises oder von Kabeln genutzt werden.

Aus der DE 35 22 447 A1 geht ein Längsträger eines Fahrschemels für den vorderen Bereich eines Kraftfahrzeuges hervor. Ein Kraftfahrzeug weist zwei derartige Längsträger auf, die sich bis unmittelbar hinter den Stoßfänger erstrecken, den sie tragen. Die Längsträger sind an den vorderen Endbereich mit einem Querträger und an ihrem hinteren Endbereich mit einem hinteren Querträger verbunden. Etwa das vordere Drittel des Längsträgers ist lösbar am hinteren Bereich des Längsträgers befestigt, so dass die beiden vorderen Bereiche des Längsträgers zusammen mit dem Querträger ein Tragwerk bilden, das mit weiteren Fahrzeugelementen, wie dem Stoßfänger, dem Kühler, einem Kondensator, einer Klimaanlage, einem Aufnahmeblech für Scheinwerfer, usw. zu einer Einheit vormontiert werden kann.

Mit dem Hilfsrahmen nach der DE 197 03 504 A1 und dem Tragwerk nach der DE 35 22 447 A1 können Teilbereiche des Vorderwagenbereiches eines Kraftfahrzouges vormontiert und als Einheit in die Karosserie des Fahrzeuges eingesetzt werden. Es besteht jedoch ein erheblicher Bedarf nach einer weiteren, effizienteren Montage der Fahrzeugteile, denn der Montageaufwand bildet einen der wesentlichen Kostenfaktoren bei der Herstellung eines Kraftfahrzeuges.

In diesem Zusammenhang ist aus der EP 0 678 441 A1 ein Vollhilfsrahmen der eingangs genannten Art bekannt, der zusammen mit dem Motor und weiteren Fahrzeugkomponenten eine vormontierbare Einheit bildet. Diese Einheit wird außerhalb der eigentlichen Fertigungsstraße des Kraftfahrzeuges zusammengebaut und anschließend an der Karosserie befestigt. An dem bekannten Vollhilfsrahmen sind Sitzabschnitte ausgebildet, mit denen der Vollhilfsrahmen unmittelbar an die Fahrzeugkarosserie angesetzt wird.

Auch die WO 96/19373 A1 offenbart einen Hilfsrahmen als Träger für einen Motor und ein Getriebe. Dieser Hilfsrahmen besitzt jedoch eine sehr aufwendige Konstruktion aus insgesamt sechs Streben, die zu einem mehrzelligen Gebilde zusammengefügt sind.

Weiterhin offenbart die DE 196 54 571 A1 einen leiterförmigen Hilfsrahmen. Der vornliegende Querträger ist gegenüber dem vorderen Fahrzeugende zurückgezogen. Die Einleitung eines Stoßes erfolgt allein über eine Stoßstange, welche zuerst mit einem Hindernis in Kontakt gelangt, wenn die Front des Fahrzeugs dagegen stößt. Die horizontale Last unterteilt sich in eine Last auf die vorderen Längsträger der Karosserie und eine weitere Last diagonal abwärts auf die Längsträger des Hilfsrahmens.

Vor diesem Hintergrund beabsichtigt die Erfindung, ein Kraftfahrzeug der eingangs genannten Art zu schaffen, das bei einer effizienten Fahrzeugmontage eine hohe Crashsicherheit erlaubt.

Dazu wird ein Kraftfahrzeug mit den Merkmalen des Anspruchs 1 angegeben. Vorteilhafte Ausgestaltungen der Erfindung sind den Unteransprüchen zu entnehmen.

Der erfindungsgemäße Vollhilfsrahmen dient zur Aufnahme und Halterung des Antriebsmotors des Getriebes und weiterer Hilfsaggregate, wie z.B. eines elektrohydraulischen Steuergerätes, eines Kühlers, eines Lenkgetriebes, eines ABS/EDS-Gerätes oder dergleichen. Der Vollhilfsrahmen umfasst einen hinteren Querträger, einen vorderen Querträger und zwei Längstraversen, die mit den beiden Querträgem zur einer in der Draufsicht etwa rechteckförmigen, geschlossenen Baueinheit zusammengesetzt und miteinander verbunden sind. Diese Baueinheit kann im vormontierten Zustand mit Antriebsmotor, Getriebe und Hilfsaggregaten in das Kraftfahrzeug eingebaut werden. Hierdurch verringert sich der Montageaufwand erheblich, da der vollständige Triebsatz mit allen Hilfsaggregaten zu einem Modul vormontiert werden kann, wobei diese Vormontage unabhängig von einem PKW-Montageband erfolgt. Das vorgefertigte Modul wird dann in einem einzigen Arbeitsvorgang in das Fahrzeug eingesetzt und mit diesem verbunden. Hierdurch ergibt sich eine deutliche Absenkung der Fertigungszeit am PKW-Montageband und eine erhebliche Kostenreduktion. Die Produktivität einer Kraftfahrzeugfabrik wird hierdurch erheblich gesteigert.

Ein weiterer wesentlicher Vorteil der Vormontage dieses Moduls auf den Vollhilfsrahmen ist, dass bei der Vormontage alle Verbindungsstellen leicht zugänglich sind, da sie nicht durch Karosserieteile verdeckt sind, wodurch die Qualität verbessert wird. Insbesondere können zur Bearbeitung der Verbindungsstellen Roboter eingesetzt werden, die zum einen äußerst zuverlässig die Arbeit verrichten und zudem kostengünstig arbeiten. Dies erlaubt eine weitere Reduktion der Kosten bei gleichzeitiger Verbesserung der Qualität.

Durch diese Anordnung des Vollhilfsrahmens an der Karosserie wird eine zusätzliche Deformationsebene unterhalb der bei jedem Fahrzeuge vorhandenen primären Deformationsebene der Karosserie geschaffen, wodurch die Crashsicherheit verbessert wird. Die Ankopplung des Hilfsrahmens mit Abstand unterhalb der Karosserie erlaubt bei einem Fahrzeugunfall einen gezieltes Abreißen des Vollhilfsrahmens, wodurch der an dem Vollhilfsrahmen befestigte Triebsatz (Motor, Getriebe und weitere Aggregate) von der eigentlichen Karosserie getrennt wird. Dadurch ist es möglich, das Verformungspotential der eigentlichen Karosserie, gut auszunutzen.

Bei einer bevorzugten Ausführungsform der Erfindung sind die Längstraversen mit den Querträgern durch Schraubverbindungen verbunden, so daß bei einer Beschädigung eines Querträgers oder einer Längstraverse oder eines mit diesen verbundenen Aggregates lediglich ein einzelner Querträger bzw. eine einzelne Längstraverse ausgebaut und der entsprechende Querträger bzw. die entsprechende Längstraverse oder das damit verbundene Aggregat ausgetauscht werden kann.

Bei einer weiteren bevorzugten Ausführungsform der Erfindung ist die vordere Quertraverse in der Draufsicht etwa U-förmig ausgebildet mit einer langen Querstrebe und zwei kurzen, etwa in Längsrichtung des Fahrzeuges verlaufenden Schenkeln. Die Schenkel sind integral mit der Querstrebe verbunden. Hierdurch kann zum einen bei der Wartung des Fahrzeuges eine vordere Untereinheit, die z. B. einen Kühler, Ladeluftkühler und Kondensator trägt, aus den Motorraum des Fahrzeuges ausgebaut werden und zum anderen bildet der Querträger eine stabile Einheit, die bei einem Auffahrunfall die Verformungsenergie auf die Längsträger weiterleitet, die sich dann entsprechend verformen. Insbesondere können auch die beiden Schenkel als Deformationsteil dienen und auf kurzem Wege viel Verformungsenergie aufnehmen. Mit dem erfindungsgemäßen Hilfsrahmen kann somit ein zusätzlicher Aufprallschutz neben dem eigentlichen Stoßfänger geschaffen werden.

Die Erfindung wird nachfolgend beispielhaft näher anhand der beiliegenden Zeichnungen erläutert. In denen zeigen:
- Fig. 1: einen erfindungsgemäßen Vollhilfsrahmen in der Draufsicht,
- Fig. 2: den Vollhilfsrahmen aus Fig. 1 in der Seitenansicht,
- Fig. 3: einen Schnitt durch eine Längstraverse entlang der Linie AA in Fig. 2 gemäß einer ersten Ausführungsform der Erfindung,
- Fig. 4: einen Schnitt durch die Längstraverse entlang der Linie AA in Fig. 2 gemäß einer zweiten Ausführungsform der Erfindung, und
- Fig. 5: einen Schnitt durch den Querträger entlang der Linie BB in Fig. 1.

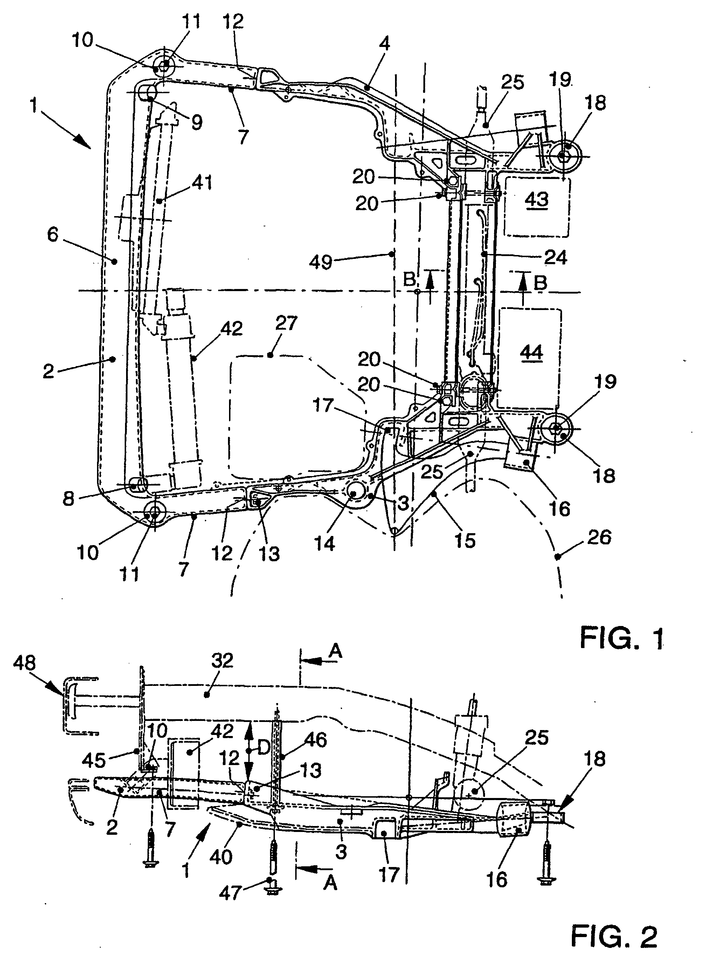

Der erfindungsgemäße Vollhilfsrahmen 1 umfaßt einen vorderen Querträger 2, zwei Längstraversen 3, 4 und einen hinteren Querträger 5. Der vordere Querträger ist in der Draufsicht U-förmig ausgebildet (Fig. 1) mit einer langen Querstrebe 6 und zwei kurzen Schenkeln 7. Die beiden Schenkel 7 und die Querstrebe 6 bilden ein integrales Bauteil. Der vordere Querträger ist vorzugsweise als mittels Innenhochdruck ausgeformtes Teil ausgebildet, so daß er in seinem Inneren einen Hohlraum begrenzt. Am vorderen Querträger 2 sind an den Endbereichen der langen Querstrebe 6 jeweils ein Stutzen 8, 9 (Eingang/Ausgang) angebracht. Der vordere Querträger 2 kann als Ladeluft-Leitung zur Leitung von Luft von einer Seite des Fahrzeuges zur anderen Seite des Fahrzeuges verwendet werden und zusätzlich als Sub-Ladeluftkühler fungieren.

In den Eckbereichen des vorderen Querträgers 2 und bzgl, der Stutzen 8, 9 etwas nach außen versetzt sind Aufnahmebereiche 10 mit vertikalen Bohrungen 11 zum Befestigen des Vollhilfsrahmen an einem Kraftfahrzeug ausgebildet.

Die freien Enden der Schenkel 7 weisen jeweils eine Stimfläche 12 auf, in die eine Gewindebohrung eingebracht ist. An die Stirnflächen 12 sind die Längstraversen 3, 4 mit korrespondierenden Stimflächen angesetzt und mittels einer Schraube 13 befestigt. Die Längstraversen 3, 4 bilden etwa eine geradlinige Verlängerung der Schenkel 7, wobei sie in ihrem hinteren Bereich nach innen etwas abgewinkelt sind. Am Scheitelpunkt der Abwinklung der in Fahrtrichtung linken Längstraverse 3 ist eine Aufnahme 14 für das Getriebe ausgebildet, das heißt, daß das Getriebe am Punkt 14 gelagert ist.

Die Längstraversen 3, 4 erstrecken sich nach hinten ein Stück über den hinteren Querträger 5 hinaus und weisen in dem zum hinteren Querträger 5 benachbarten Bereich eine zur Aufnahme und Lagerung eines Quer- oder Schräglenkers 15 geeignete Form mit entsprechenden Lagern 16, 17 auf. Die Längstraversen 3, 4 weisen an ihrem rückwärtigen Ende eine weitere Aufnahme 18 mit einer Durchgangsbohrung 19 zur Befestigung des Vollhilfsrahmen 1 am Fahrzeug auf.

Die Längstraversen 3, 4 sind jeweils mit mehreren Schrauben 20 am hinteren Querträger 5 befestigt.

Der hintere Querträger 5 weist im Querschnitt eine nach oben offene U-förmige Form mit einem Bodenabschnitt 21 und zwei Wandungsabschnitten 22, 23 auf. Der in Fahrtrichtung vordere Wandungsabschnitt 23 ist höher als der in Fahrtrichtung hintere Wandungsabschnitt 22 und ist an seinem oberen Ende nach hinten zweifach abgewinkelt abgekröpft. Vorzugsweise ist der Querträger entsprechend der Lehre der DE 197 03 504 A1 ausgebildet und am Fahrzeug bzgl, der Antriebsachse angeordnet.

Am hinteren Querträger 5 sind Leitungen 24 für die Servolenkung befestigt. Oberhalb des hinteren Querträgers ist in geringem Abstand das Lenkgetriebe 25 (mit Strichpunktierter Linie dargestellt) angeordnet, dessen Lenkgestänge mit seinen Enden über den Querträger 5 vorsteht.

Die Längstraversen 3, 4 erstrecken sich durch einen räumlich sehr eng begrenzten Bereich, der zwischen der Reifenhüllkurve 26 des Fahrzeugreifens und dem Getriebe. Zur Vereinfachung der Zeichnungen ist in Fig. 1 lediglich die Ölwanne 27 von einem automatischen Getriebe anstelle des gesamten Getriebes gezeigt. Die Reifenhüllkurve 26 umfaßt die äußere Reifenbegrenzung des Fahrzeugreifens in allen Lenkstellungen. Um in diesen schmalen Bereich eine hohe Festigkeit der Längstraversen 3, 4 vorzusehen, ist die Querschnittsform maximaler Größe ausgelegt.

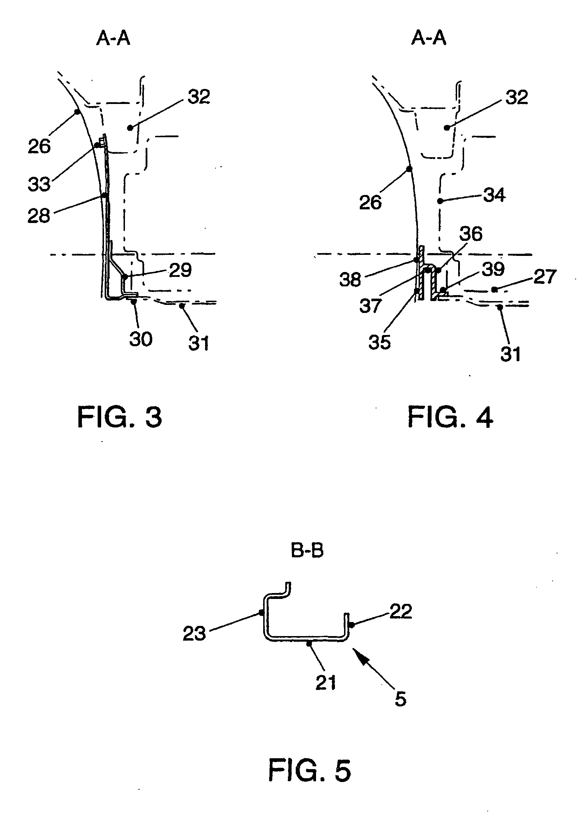

Gemäß einer ersten Ausführungsform der Erfindung (Fig. 3) bestehen die Längstraversen 3, 4 aus einer Blechkonstruktion, mit einer äußeren Blechschale 28, die an ihrem unteren Rand nach innen abgewinkelt ist, und einer inneren Blechschale 29, die mit der äußeren Blechschale 28 zu einem im Querschnitt etwa rechteckförmigen Hohlprofil verschweißt ist, das durch diese Raumform eine hohe Steifigkeit aufweist. Am unteren Randbereich bilden die beiden Blechschalen 28, 29 einen Schweißflansch 30 der horizontal nach innen vorsteht und zum Befestigen einer Geräuschkapsel 31 dient. Die äußere Schale 28 ist zur Erhöhung der Stabilität weit nach oben gezogen und mit einem Längsträger 32 mittels einer Schraube 33 verschraubt.

Eine weitere Ausführungsform der Längstraversen 3, 4 ist in Fig. 4 gezeigt, die als Gußteil ausgebildet ist. Diese Längstraverse 3, 4 besitzt einen schmalen, aber hohen und nach unten offenen U-förmigen Querschnitt, der zwischen der Reifenhüllkurve 26, der Ölwanne 27 und einer Getriebeabdeckung 34 paßt. Die Längstraverse 3, 4 besteht somit aus einer äußeren Seitenwandung 35 und einer inneren Seitenwandung 36 und einer Deckenwandung 37. Die äußere Seitenwandung 35 ist zur Erhöhung der Steifigkeit der Längstraverse 3, 4 nach oben über die Deckenwandung 37 mittels eines Versteifungssteges 38 verlängert. Am unteren Randbereich der inneren Seitenwandung 36 ist ein waagrecht liegender, nach innen vorstehender Steg 39 ausgebildet. Dieser waagrechte Steg 39 verleiht der Längstraverse 3, 4 ein hohes Widerstandsmoment gegen Verbiegungen in einer waagrechten Ebene. Zudem kann er wiederum zur Befestigung einer unteren Geräuschkapsel 31 verwendet werden.

Unabhängig von der Ausführungsform der Längstraversen 3, 4 sind deren Unterkanten, insbesondere am vorderen Endbereich als Gleitkufen 40 ausgebildet. Die Gleitkufen 40 erstrecken sich vorzugsweise nach vorne bis unter den hinteren Endbereich der Schenkel 7 des vorderen Querträgers 2 und sind tiefer als die unterste Aggregatkontur, wodurch bei einem Fahrzeugkontakt mit einem Bordstein zunächst die Gleitkufe mit dem Bordstein in Berührung kommt und die Aggregate sicher geschützt sind.

Der erfindungsgemäße Vollhilfsrahmen 1 wird als Modul vor dem Einbau in das Fahrzeug vormontiert, wobei in das Modul der Motor, das Getriebe und weitere Hilfsaggregate integriert sind. Derartige Hilfsaggregate sind z. B. ein Kühler 41, ein Ladeluftkühler 42, die Ölwanne 27, ein Kondensator, ein elektrohydraulisches Steuergerät 43 oder ein ABS/EDS-Gerät 44. Das vollständige Modul wird bei der Montage am Förderband von unten in die Fahrzeugkarosserie gehoben und starr mit dem Längsträger 32 verbunden. Hierbei wird der Vollhilfsrahmen an den Aufnahmebereichen 10 mit einem am vorderen Ende des Längsträgers 32 befestigten Stützblech 45 verschraubt und mittels eines Distanzrohres 46 und einer langen Schraube 47 im Bereich des vorderen Endes der Längstraversen 3, 4 am Längsträger 32 befestigt und am hinteren Ende der Längsträger 3, 4 an den Aufnahmen 18 mit dem Längsträger 32 verschraubt. Der Vollhilfsrahmen ist zumindest am vorderen Bereich mit deutlichen Abstand unterhalb der Längsträger 32 angeordnet, wobei der Abstand D etwa 20 cm bis 40 cm beträgt (Fig. 2). Am vorderen Ende der Längsträger 32 ist ein Stoßfänger 48 befestigt. Durch die Anordnung des Vollhilfsrahmens 1 unterhalb des Stoßfängers 48 bildet der Vollhilfsrahmen 1 ein zweites Stoßaufnahmeelement neben dem Stoßfänger 48.

Bei einem Auffahrunfall wirken die Schenkel 7 des vorderen Querträgers 2 als Deformationsteile die beim Unfall Verformungsenergie aufnehmen können. Bei einem starken Auffahrunfall können zudem die Längstraversen 3, 4 verformt werden.

Die Schraubverbindungen zwischen dem Vollhilfsrahmen 1 und den Längsträgem 32 sind vorzugsweise so ausgelegt, daß sie bei einem Unfall abreißen, so daß die Verformung des Längsträgers 32 nicht durch die mit dem Vollhilfsrahmen verbundenen Elemente wie Motor, Getriebe und dergleichen beschränkt wird. Hierdurch können die Längsträger mehr Verformungsenergie aufnehmen, bevor die Fahrgastzelle beschädigt wird. Dies kann zu einer weiteren Steigerung der Sicherheit des Fahrzeuges führen.

Das an der Längstraverse 3 an der Stelle 14 befestigte Getriebe löst sich beim Auffahrunfall von der Längstraverse 3 und fällt herunter, wodurch die Verformung der darüberliegenden Teile nicht beeinträchtigt wird.

Das Verformungsverhalten der als Deformationsteile dienenden Schenkel 7 und der Längstraversen 3, 4 läßt sich durch die Lage der Verbindungsstellen zwischen dem Vollhilfsrahmen und den Längsträgern 32 beeinflussen. Je weiter hinten die Verbindungsstellen angeordnet sind, desto länger wird das Deformationsteil und kann damit mehr Deformationsenergie aufnehmen. Je weiter vorne die Verbindungsstellen liegen, um so stärker wirkt der vordere Querträger des Vollhilfsrahmens 1 als zusätzlicher Stoßfänger, der sich gegen Barrieren abstützen kann und insbesondere in weiche Barrieren eindringen kann.

Mit dem erfindungsgemäßen Vollhilfsrahmen 1 wird die Montage eines Fahrzeuges wesentlich beschleunigt, da der komplette Triebsatz auf dem Vollhilfsrahmen vormontiert werden kann. Hierbei ist von Vorteil, daß die einzelnen Verbindungsstellen frei zugänglich sind, so daß der Einsatz von Robotern möglich ist. Außerdem kann das gesamte Triebsatz-Modul vor dem Einbau in das Fahrzeug auf Fehler überprüft werden.

Mit dem erfindungsgemäßen Vollhilfsrahmen ergibt sich eine deutliche Absenkung der Fertigungszeit und damit der Fertigungskosten am PKW-Montageband. Zudem wird eine erhebliche Qualitätssteigerung erzielt.

Ein weiterer Vorteil der Erfindung ergibt sich dadurch, daß die Aufnahme 14 für das Getriebe an der Längstraverse 3 sehr nahe an der Fahrzeugachse 49 angeordnet ist, wodurch die Momente beim Anfahren und Anhalten klein gehalten werden und hierdurch erzeugte Eintauch- bzw. Hubbewegung des Vorderwagens gering gehalten werden. Dies führt zu einer Steigerung des Fahrkomforts.

Die Erfindung ist oben anhand eines Ausführungsbeispieles näher erläutert worden. Die Erfindung ist jedoch nicht auf dieses konkrete Ausführungsbeispiel beschränkt. Im Rahmen der Erfindung liegt z. B. auch eine Ausführungsform, bei der der vordere Querträger nicht als einschaliges Teil, sondem als doppelschaliges Schweißteil ausgebildet ist.

### BEZUGSZEICHENLISTE

- 1: Vollhilfsrahmen
- 2: Vorderer Querträger
- 3: Längstraverse links
- 4: Längstraverse rechts
- 5: Hinterer Querträger
- 6: Lange Querstrebe
- 7: Schenkel
- 8: Stutzen
- 9: Stutzen
- 10: Aufnahmebereich
- 11: Bohrung
- 12: Stimfläche
- 13: Schraube
- 14: Aufnahme für Getriebe
- 15: Querlenker
- 16: Lager für Querlenker
- 17: Lager für Querlenker
- 18: Aufnahme
- 19: Bohrung
- 20: Schrauben
- 21: Bodenabschnitt
- 22: Wandungsabschnitt
- 23: Wandungsabschnitt
- 24: Leitung für Servolenkung
- 25: Lenkgetriebe
- 26: Reifenhüllkurfe
- 27: Ölwanne
- 28: Äußere Blechschale
- 29: Innere Blechschale
- 30: Schweißflansch
- 31: Geräuschkapsel
- 32: Längsträger
- 33: Schraube
- 34: Getriebeabdeckung
- 35: Äußere Seitenwandung
- 36: Innere Seitenwandung
- 37: Deckenwandung
- 38: Versteifungssteg
- 39: Waagrechter Steg
- 40: Gleitkufe
- 41: Kühler
- 42: Ladeluftkühler
- 43: Elektrohydraulisches Steuergerät
- 44: ABS/EDS-Gerät
- 45: Stützblech
- 46: Distanzrohr
- 47: Schraube
- 48: Stoßfänger
- 49: Fahrzeugachse

## Patentansprüche

1. Kraftfahrzeug, insbesondere Personenkraftfahrzeug mit einem Vollhilfsrahmen (1) zur Aufnahme und Halterung eines Antriebsmotors, eines Getriebes und weiterer Hilfsaggregate wie z. B. eines hydraulischen Steuergeräts (43), eines Kühlers (41), eines Lenkgetriebes oder eines ABS/EDS-Gerätes (44), umfassend einen vorderen Querträger (2), einen hinteren Querträger (5), und zwei Längstraversen (3, 4), die mit den beiden Querträgem (2, 5) zu einer in der Draufsicht etwa rechteckförmigen, geschlossenen Baueinheit zusammengesetzt und miteinander verbunden sind, wobei die Baueinheit derart ausgebildet ist, um von unten an einer Karosserie des Kraftfahrzeugs befestigt zu werden, **dadurch gekennzeichnet, dass** der Vollhilfsrahmen (1) im Bereich des vorderen Querträgers (2) derart konfiguriert ist, um mit Abstand unter einem Abschnitt der Karosserie angeordnet und mittels eines Stützblechs (45) an diesem befestigt zu werden, um ein Stoßaufnahmeelement zu bilden.

2. Kraftfahrzeug nach Anspruch 1, **dadurch gekennzeichnet, dass** das Stützblech (45) an dem vorderen Querträger (2) angreift.

3. Kraftfahrzeug nach Anspruch 1 oder 2, **dadurch gekennzeichnet, dass** ein vorderer Endabschnitt einer Längstraverse (3, 4) des Vollhilfsrahmens derart konfiguriert ist, um mittels eines Distanzrohrs (46) mit Abstand an einem Abschnitt der Karosserie befestigt zu werden.

4. Kraftfahrzeug nach einem der Ansprüche 1 bis 3, **dadurch gekennzeichnet, dass** der Abstand 20 bis 40 cm beträgt.

5. Kraftfahrzeug nach einem der Ansprüche 1 bis 4, **dadurch gekennzeichnet, dass** die Längstraversen (3, 4) mit den Querträgem (2, 5) verschraubt sind.

6. Kraftfahrzeug nach einem der Ansprüche 1 bis 5, **dadurch gekennzeichnet, dass** der vordere Querträger (2) U-förmig mit einer langen Querstrebe (6) und zwei kurzen Schenkeln (7) ausgebildet ist, wobei die Schenkel (7) jeweils durch eine Längstraverse (3, 4) fortgesetzt werden.

7. Kraftfahrzeug nach einem der Ansprüche 1 bis 5, **dadurch gekennzeichnet, dass** der vordere Querträger (2) U-förmig mit einer langen Querstrebe (6) und zwei langen Schenkeln (7) ausgebildet ist, wobei die Schenkel (7) jeweils durch eine Längstraverse (3, 4) fortgesetzt werden.

8. Kraftfahrzeug nach einem der Ansprüche 1 bis 7, **dadurch gekennzeichnet, dass** an diesem eine Aufnahme (14) für das Getriebe vorgesehen ist, die an einer der beiden Längstraversen (3,4) nahe einer Achse (49) des Fahrzeugs angeordnet ist.

9. Kraftfahrzeug nach einem der Ansprüche 1 bis 8, **dadurch gekennzeichnet, dass** der vordere Querträger (2) ein hohles, mittels Innenhochdruckverformung ausgebildetes Teil ist.

10. Kraftfahrzeug nach Anspruch 9, **dadurch gekennzeichnet, dass** der vordere Querträger (2) an seinen seitlichen Randbereichen Stutzen (8, 9) aufweist, so dass der vordere Querträger (2) ein Verbindungsrohr, beispielsweise für gekühlte Ladeluft, ausbildet.

11. Kraftfahrzeug nach einem der Ansprüche 1 bis 10, **dadurch gekennzeichnet, dass** die Längstraverse (3, 4) als Blechkonstruktion mit einer äußeren Blechschale (28) und einer inneren Blechschale (29) ausgebildet sind, die zu einem Hohlprofil miteinander verschweißt sind.

12. Kraftfahrzeug nach Anspruch 11, **dadurch gekennzeichnet, dass** sich die äußere Blechschale (28) nach oben bis zu dem Karosserieabschnitt erstreckt

13. Kraftfahrzeug nach Anspruch 11 oder 12, **dadurch gekennzeichnet, dass** die beiden Blechschalen (28, 29) einen waagrechten, nach innen vorstehenden Schweißflansch (30) bilden.

14. Kraftfahrzeug nach einem der Ansprüche 1 bis 10, **dadurch gekennzeichnet, dass** die Längstraversen (3, 4) als Gussteil oder Blechteil ausgebildet sind.

15. Kraftfahrzeug nach Anspruch 14, **dadurch gekennzeichnet, dass** die Längstraversen (3, 4) im Querschnitt ein U-förmiges, nach unten offenes Profil mit einer äußeren Seitenwandung (35), einer inneren Seitenwandung (36) und einer Deckenwandung (37) aufweisen, wobei die äußere Seitenwandung (35) nach oben mittels eines Versteifungssteges über die Deckenwandung (37) hinaus verlängert ist und an der inneren Seitenwandung (35) ein waagrechter Steg (39) angeformt ist.

16. Kraftfahrzeug nach einem der Ansprüche 1 bis 15, **dadurch gekennzeichnet, dass** die Längstraversen (3, 4) an ihren Unterkanten Gleitkufen (40) bilden.

17. Kraftfahrzeug nach einem der Ansprüche 1 bis 16, **dadurch gekennzeichnet, dass** der hinteren Querträger (5) als ein im Querschnitt nach oben offenes, U-förmiges Profil ausgebildet ist.

18. Kraftfahrzeug nach einem der Ansprüche 1 bis 17, **dadurch gekennzeichnet, dass** dessen Karosserie Längsträger (32) aufweist und der Vollhilfsrahmen (1) starr mit den Längsträgem (32) verbunden ist.

19. Kraftfahrzeug nach Anspruch 18, **dadurch gekennzeichnet, dass** die Längsträger (32) an ihrem vorderen Ende einen Stoßfänger (48) tragen, und dass der Vollhilfsrahmen (1) mit Abstand unterhalb der Längsträger (32) angeordnet ist, wobei der Vollhilfsrahmen (1) mit seinem vorderen Querträger (2) ein unter dem Stoßfänger (48) angeordnetes, zweites Stoßaufnahmeelement bildet.

## Claims

1. Motor vehicle, in particular for a passenger vehicle, having a solid auxiliary frame (1) for holding and supporting a driving engine, a gearbox and further auxiliary assemblies, such as, for example, a hydraulic control unit (43), a radiator (41), a steering gear or an ABS/EDS unit (44), comprising a front transverse support (2), a rear transverse support (5), and two longitudinal cross bars (3, 4) which are combined with the two transverse supports (2, 5) to form a closed constructional unit, which is approximately rectangular in plan view, and are connected to one another, the constructional unit being designed in such a manner so as to be fastened from below to the body of the motor vehicle, **characterized in that** the solid auxiliary frame (1) is configured in the region of the front transverse support (2) in such a manner so as to be arranged at a distance below a section of the body and to be fastened to this by means of a supporting plate (45), in order to form an impact-absorbing element.

2. Motor vehicle according to Claim 1, **characterized in that** the supporting plate (45) engages on the front transverse support (2).

3. Motor vehicle according to Claim 1 or 2, **characterized in that** a front end section of a longitudinal cross bar (3, 4) of the solid auxiliary frame is configured in such a manner so as to be fastened at a distance to a section of the body by means of a spacer tube (46).

4. Motor vehicle according to one of Claims 1 to 3, **characterized in that** the distance is 20 to 40 cm.

5. Motor vehicle according to one of Claims 1 to 4, **characterized in that** the longitudinal cross bars (3, 4) are screwed to the transverse supports (2, 5).

6. Motor vehicle according to one of Claims 1 to 5, **characterized in that** the front transverse support (2) is of U-shaped design with one long transverse strut (6) and two short limbs (7), the limbs (7) respectively being continued by a longitudinal cross bar (3, 4).

7. Motor vehicle according to one of Claims 1 to 5, **characterized in that** the front transverse support (2) is of U-shaped design with one long transverse strut (6) and two long limbs (7), the limbs (7) respectively being continued by means of a longitudinal cross bar (3, 4).

8. Motor vehicle according to one of Claims 1 to 7, **characterized in that** a holder (14) for the gearbox is provided on the said frame, the holder being arranged in the vicinity of an axle (49) of the vehicle on one of the two longitudinal cross bars (3, 4).

9. Motor vehicle according to one of Claims 1 to 8, **characterized in that** the front transverse support (2) is a hollow part formed by means of internal high pressure deformation.

10. Motor vehicle according to Claim 9, **characterized in that** the front transverse support (2) has stubs (8, 9) on its lateral edge regions, so that the front transverse support (2) forms a connecting pipe, for example for cooled charge air.

11. Motor vehicle according to one of Claims 1 to 10, **characterized in that** the longitudinal cross bars (3, 4) are designed as a sheet-metal structure with an outer sheet-metal shell (28) and an inner sheet-metal shell (29) which are welded to each other to form a hollow profile.

12. Motor vehicle according to Claim 11, **characterized in that** the outer sheet-metal shell (28) extends upwards as far as the body section.

13. Motor vehicle according to Claim 11 or 12, **characterized in that** the two sheet-metal shells (28, 29) form a horizontal, inwardly protruding welding flange (30).

14. Motor vehicle according to one of Claims 1 to 10, **characterized in that** the longitudinal cross bars (3, 4) are designed as a cast part or sheet-metal part.

15. Motor vehicle according to Claim 14, **characterized in that** the longitudinal cross bars (3, 4) have, in cross section, a U-shaped, downwardly open profile with an outer side wall (35), an inner side wall (36) and a top wall (37), the outer side wall (35) being extended upwards beyond the top wall (37) by means of a stiffening web, and a horizontal web (39) being integrally formed on the inner side wall (36).

16. Motor vehicle according to one of Claims 1 to 15, **characterized in that** the longitudinal cross bars (3, 4) form sliding runners (40) on their lower edges.

17. Motor vehicle according to one of Claims 1 to 16, **characterized in that** the rear transverse support (5) is designed as a cross-sectionally upwardly open, U-shaped profile.

18. Motor vehicle according to one of Claims 1 to 17, **characterized in that** its body has longitudinal supports (32) and the solid auxiliary frame (1) is connected rigidly to the longitudinal supports (32).

19. Motor vehicle according to Claim 18, **characterized in that** the longitudinal supports (32) bear a bumper (48) at their front end, and **in that** the solid auxiliary frame (1) is arranged at a distance below the longitudinal supports (32), the solid auxiliary frame (1) forming, together with its front transverse support (2), a second impact-absorbing element which is arranged below the bumper (48).

## Revendications

1. Véhicule automobile, en particulier voiture particulière avec un faux-châssis plein (1) pour la réception et la fixation d'un moteur de commande, d'une boîte de vitesses et d'autres agrégats auxiliaires tels par exemple un appareil de commande hydraulique (43), un radiateur (41), un mécanisme de direction ou un appareil antibloqueur/à système électronique de transfert de données (44), comprenant une entretoise transversale avant (2), une entretoise transversale arrière (5), et deux traverses longitudinales (3, 4) lesquelles sont assemblées et reliées ensembles avec les deux entretoises transversales (2, 5) pour former une unité modulaire fermée de forme à peu près rectangulaire lorsque vue de dessus, moyennant quoi l'unité modulaire est conçue de manière à pouvoir être fixée par le bas sur la carrosserie du véhicule automobile, **caractérisé en ce que** le faux-châssis plein (1) est configuré dans la zone de l'entretoise transversale avant (2) pour pouvoir être disposé avec un espacement sous une partie de la carrosserie et être fixé sur celle-ci à l'aide d'une tôle de support (45), de manière à former un élément de réception des chocs.

2. Véhicule automobile selon la revendication 1, **caractérisé en ce que** la tôle de support (45) est en prise sur l'entretoise transversale avant (2).

3. Véhicule automobile selon l'une quelconque des revendications 1 ou 2, **caractérisé en ce qu'**une partie d'extrémité avant d'une traverse longitudinale (3, 4) du faux-châssis plein est configurée de manière à pouvoir être fixée à l'aide d'un tube d'écartement (46) et avec un espacement sur une partie de la carrosserie.

4. Véhicule automobile selon l'une quelconque des revendications 1 à 3, **caractérisé en ce que** l'espacement est de 20 à 40 cm.

5. Véhicule automobile selon l'une quelconque des revendications 1 à 4, **caractérisé en ce que** les traverses longitudinales (3, 4) sont vissées sur les entretoises transversales (2, 5).

6. Véhicule automobile selon l'une quelconque des revendications 1 à 5, **caractérisé en ce que** l'entretoise transversale avant (2) est réalisée en forme de U avec un montant transversal long (6) et deux branches courtes (7), moyennant quoi les branches (7) sont respectivement prolongées par une traverse longitudinale (3, 4).

7. Véhicule automobile selon l'une quelconque des revendications 1 à 5, **caractérisé en ce que** l'entretoise transversale avant (2) est réalisée en forme de U avec un montant transversal long (6) et deux branches longues (7), les branches (7) étant respectivement prolongées par une traverse longitudinale (3, 4).

8. Véhicule automobile selon l'une quelconque des revendications 1 à 7, **caractérisé en ce qu'**un logement (14) pour la boîte de vitesses est prévu sur celui-ci, lequel est aménagé sur une des deux traverses longitudinales (3, 4) à proximité de l'axe (49) du véhicule.

9. Véhicule automobile selon l'une quelconque des revendications 1 à 8, **caractérisé en ce que** l'entretoise transversale avant (2) est une pièce creuse formée à l'aide de déformation par haute-pression interne.

10. Véhicule automobile selon la revendication 9, **caractérisé en ce que** l'entretoise transversale avant (2) présente des tubulures (8, 9) sur ses zones de bord latérales, de sorte que l'entretoise transversale avant (2) forme un tuyau de liaison, pour de l'air de suralimentation refroidi par exemple.

11. Véhicule automobile selon l'une quelconque des revendications 1 à 10, **caractérisé en ce que** les traverses longitudinales (3, 4) sont réalisées en tant que construction en tôle avec une enveloppe en tôle extérieure (28) et une enveloppe en tôle intérieure (29), lesquelles sont soudées ensemble pour former un profilé creux.

12. Véhicule automobile selon la revendication 11, **caractérisé en ce que** l'enveloppe en tôle extérieure (28) s'étend vers le haut jusqu'à la partie de carrosserie.

13. Véhicule automobile selon l'une quelconque des revendications 11 ou 12, **caractérisé en ce que** les deux enveloppes en tôle (28, 29) forment une collerette à souder (30) horizontale dépassant vers l'intérieur.

14. Véhicule automobile selon l'une quelconque des revendications 1 à 10, **caractérisé en ce que** les traverses longitudinales (3, 4) sont réalisées en tant qu'élément de fonte ou élément en tôle.

15. Véhicule automobile selon la revendication 14, **caractérisé en ce que** les traverses longitudinales (3, 4) présentent en coupe transversale un profilé en forme de U ouvert vers le bas avec une paroi latérale extérieure (35), une paroi latérale intérieure (36), et une paroi de couverture (37), moyennant quoi la paroi latérale extérieure (35) est prolongée vers le haut à l'aide d'une nervure raidisseuse en dépassant la paroi de couverture (37), et moyennant quoi une nervure (39) horizontale est formée sur la paroi latérale intérieure (35).

16. Véhicule automobile selon l'une quelconque des revendications 1 à 15, **caractérisé en ce que** les traverses longitudinales (3, 4) forment des courbes de glissement (40) sur leurs arêtes inférieures.

17. Véhicule automobile selon l'une quelconque des revendications 1 à 16, **caractérisé en ce que** l'entretoise transversale arrière (5) est développée en tant que profilé en forme de U ouvert vers le haut en coupe transversale.

18. Véhicule automobile selon l'une quelconque des revendications 1 à 17, **caractérisé en ce que** sa carrosserie présente des longerons (32), et **en ce que** le faux-châssis plein (1) est relié de manière rigide aux longerons (32).

19. Véhicule automobile selon la revendication 18, **caractérisé en ce que** les longerons (32) portent un pare-chocs (48) sur leur extrémité avant, et **en ce que** le faux-châssis plein (1) est disposé avec un espacement en-dessous des longerons (32), moyennant quoi le faux-châssis plein (1) forme avec son entretoise transversale avant (2) un deuxième élément de réception des chocs disposé sous le pare-chocs (48).
